# EUROPÄISCHE PATENTSCHRIFT

(11) **EP 3 818 574 B1**
(45) Veröffentlichungstag und Bekanntmachung des Hinweises auf die Patenterteilung: **29.05.2024**
(21) Anmeldenummer: 19735517.5
(22) Anmeldetag: 26.06.2019
(51) Int. Cl.: H01M 50/503, H01M 50/517, H01M 50/548, H01M 50/555, H01M 50/566

(54) **POUCHZELLE UND STACK**
POUCH CELL AND STACK
ÉLÉMENT À POCHE ET EMPILEMENT

(30) Priorität: 04.07.2018 EP 18181724
(43) Veröffentlichungstag der Anmeldung: 12.05.2021
(73) Patentinhaber: Hilti Aktiengesellschaft, 9494 Schaan (LI)
(72) Erfinder: LEPIORZ, Matthias, 09112 Chemnitz (DE); MARTINY, Nora, 82211 Herrsching-Breitbrunn (DE); ZIEGLER, Bernd, 86830 Schabmünchen (DE); STANGER, Robert, 87600 Kaufbeuren (DE); SAX, Kathrin, 86937 Scheuring (DE); ENDER, Moses, 9470 Buchs (CH); HAUSER, Klaus, 86830 Schwabmünchen (DE)
(74) Vertreter: Hilti Aktiengesellschaft Corporate Intellectual Property
(86) Internationale Anmeldenummer: PCT/EP2019/066987
(87) Internationale Veröffentlichungsnummer: WO 2020/007679

(56) Entgegenhaltungen:
- EP-A1- 1 922 776
- US-A1- 2018 026 294

## Beschreibung

Die vorliegende Erfindung betrifft eine Pouchzelle mit einem Plus-Kontaktbereich und einem Minus-Kontaktbereich, über die die Pouchzelle elektrisch kontaktiert und so beladen und entladen werden kann. Die Pouchzelle ist flächig ausgebildet und weist eine Zelloberseite sowie eine der Zelloberseite gegenüberliegende eine Zellunterseite aufweist. Vorzugsweise weist die Pouchzelle einen Lithium-Ionen-Akkumulator auf.

Pouchzellen der eingangs genannten Art sind grundsätzlich aus dem Stand der Technik bekannt, zum Beispiel aus US 2018/026294 A1 oder EP 1 922 776 A1.

Der vorliegenden Erfindung liegt die Aufgabe zugrunde, eine Pouchzelle bereitzustellen, die ein einfaches und sicheres Kontaktieren begünstigt.

Die Aufgabe wird durch eine spezielle Ausbildung der Kontaktbereiche, gemäß Hauptanspruch 1, gelöst.

Die Erfindung schließt die Erkenntnis ein, dass Pouchzellen des Standes der Technik im Massenproduktionsprozess schwierig zu handhaben sind, da ihre Kontaktfahnen typischerweise nahe beieinanderliegen und die Pouchzellen bei unachtsamer Handhabbarkeit kurzgeschlossen werden können. Weiterhin wurde erkannt, dass Pouchzellen aufgrund ihrer Bauform zur elektrischen Kontaktierung bisher nicht widerstandsgeschweißt werden können. Dies führt beim Massenproduktionsprozess von Akkupacks bzw. Stacks mit Pouchzellen zu einem hohen technischen und finanziellen Aufwand für automatisierte Anlagen, welche die elektrische Kontaktierung der einzelnen Pouchzellen durchführen. Der Stack kann auch als Stapel, Stoß oder Anhäufung bezeichnet werden.

In Abkehr dazu wird eine Pouchzelle geschaffen, deren Plus-Kontaktbereich ausschließlich auf der Zelloberseite und deren Minus-Kontaktbereich ausschließlich auf der Zellunterseite, oder umgekehrt, befindlich ist. Dadurch kann die erfindungsgemäße Pouchzelle in einem Massenproduktionsprozess vorteilhafterweise unbedenklich gehandhabt werden, d.h. etwaige Kurschlüsse zwischen Pouchzellen eines Stacks können vermieden werden.

Auf Basis der erfindungsgemäß bereitgestellten Pouchzelle kann ein Stack mit einer Mehrzahl von Pouchzellen bereitgestellt werden. Ein solcher Stack kann Teil eines Akkupacks zur Versorgung einer elektrischen Handwerkzeugmaschine sein. Demgemäß führt die Erfindung auch auf die Verwendung eines Stacks mit einer Mehrzahl erfindungsgemäßer Pouchzellen zur Versorgung einer elektrischen Handwerkzeugmaschine.

Diesbezüglich schließt die Erfindung die Erkenntnis ein, dass Akkupacks für elektrische Handwerkzeugmaschinen typischerweise ausschließlich aus zylindrisch geformten Lithium-lonen-Zellen gefertigt sind. Mit zunehmender Leistungsanforderung von Handwerkzeugmaschinen steigen jedoch die erforderlichen Entladeströme, wodurch die Batteriepacks infolge höherer Verlustleistungen die maximale Zulässigkeit vor dem Entladen erreichen und thermisch bedingt abgeschaltet werden müssen. Die im Batteriepack verbleibende Restenergie steht Nutzern nicht - oder erst nach einer Abkühlphase - zur Verfügung.

Mit einem Stack aufweisend eine Mehrzahl erfindungsgemäß kontaktierter Pouchzellen, kann ein thermisch bedingtes Abschalten von Batteriepacks für elektrische Handwerkzeugmaschinen reduziert werden. Dies da statt konventioneller zylindrisch geformter Lithium-lonen-Zellen nunmehr Pouchzellen eingesetzt werden können. Es wurde erkannt, dass Pouchzellen aufgrund ihres inneren elektrischen Aufbaus einen geringeren elektrischen Widerstand besitzen und somit bei vergleichsweise hohen Entladeleistungen weniger Verlustleistung aufweisen, wodurch Batteriepacks mit solchen Pouchzellen entweder länger oder mit höheren Leistungen betrieben werden können.

In einer besonders bevorzugten Ausgestaltung ist der Plus-Kontaktbereich als elektrisch-mechanisches Plus-Verbindungselement und/oder der Minus-Kontaktbereich als elektrisch-mechanisches Minus-Verbindungselement ausgebildet. Das Plus-Verbindungselement und/oder das Minus-Verbindungselement können jeweils flach und zum Kontaktieren mittels Verpressens oder Verschweißens ausgebildet sein. Ein Stack mit einer Mehrzahl von Pouchzellen kann demnach dadurch bereitgestellt werden, dass die vorzugsweise flächig ausgebildeten Kontaktbereiche benachbarter Pouchzellen aneinander anliegen. Durch Aufeinanderpressen der einzelnen Pouchzellen in einem Akkupackgehäuse kann eine Kontaktierung der Einzelzellen gewährleistet werden. Durch ein solches Aufeinanderpressen der Einzelzellen wird vorzugsweise eine reversible Verbindung zwischen den jeweiligen Kontaktbereichen der geschichteten Pouchzellen erreicht. In einem alternativen Ausführungsbeispiel können die geschichteten Pouchzellen auch irreversibel miteinander verbunden sein. Dies kann beispielsweise dadurch geschehen, dass vor einem Aufeinanderpressen der Pouchzellen eine leitende Beschichtung, die dann einen jeweiligen Kontaktbereich bildet, aufgetragen wird, wobei die leitende Beschichtung eine Klebe- oder Haftwirkung aufweist. In einer weiteren Ausgestaltung kann ein Verbindungselement beispielsweise durch einen verschweißfähigen und leitfähigen Kunststoff dargestellt werden, wobei ein Verschweißen beispielsweise mittels thermischem oder Ultraschallschweißen erfolgen kann.

Erfindungsgemäß ist das Plus-Verbindungselement und das Minus-Verbindungselement jeweils als Steckverbindungselement ausgebildet. Vorzugsweise sind das Plus-Verbindungselement und das Minus-Verbindungselement als Steckverbindungselemente komplementären Typs ausgestaltet. So kann beispielsweise das Plus-Verbindungselement als männliches Steckverbindungselement und das Minus-Verbindungselement als weibliches Steckverbindungselement, oder umgekehrt, ausgebildet sein. In einer besonders bevorzugten Ausgestaltung bilden das als Steckverbindungselement ausgebildete Plus-Verbindungselement und das als Steckverbindungselement ausgebildete Minus-Verbindungselement eine Steckverbindung im Sinne einer trapezförmigen Schlittenführung oder aber auch im beispielsweise im Sinne einer trapezförmigen Schwalbenschwanzführung. Es hat sich als vorteilhaft herausgestellt, wenn eine Steckrichtung der Steckverbindungselemente parallel zur Zelloberseite und zur Zellunterseite orientiert ist. Eine Steckverbindung zwischen Plus-Verbindungselement und Minus-Verbindungselement kann reversibel als auch irreversibel ausgebildet sein. Für eine irreversible Ausgestaltung kann ein Steckverbindungselement oder können beide Steckverbindungselemente beispielsweise über Widerhaken verfügen.

In einer nicht erfindungsgemäßen Ausgestaltung sind das Plus-Verbindungselement und/oder das Minus-Verbindungselement jeweils als Schraubverbindungselemente ausgebildet. Vorzugsweise sind solche Schraubverbindungselemente vorzugsweise komplementären Typs. Mittels der Schraubverbindungselemente können einzelne Pouchzellen eines Stacks miteinander bzw. ineinander verschraubt werden. Auch eine solche Kontaktierung kann reversibel oder irreversibel ausgestaltet sein.

Die Schraubverbindungselemente sind lediglich abschnittsweise elektrisch leitfähig, derart, dass ein elektrisches Kontaktieren erst nach einem oder am Ende eines mechanischen Kontaktierens erfolgt. Mit anderen Worten kann vorgesehen sein, dass durch ineinander bzw. aneinander zu schraubende Zellen eine elektrische Kontaktierung erst erfolgt, wenn die Zellen vollständig aneinander bzw. ineinander verschraubt sind. Dies hat den Vorteil, dass Kurzschlüsse durch falsche Kontaktierungen im Massenproduktionsprozess grundsätzlich ausgeschlossen oder zumindest aber deutlich vermindert werden können.

Es hat sich als vorteilhaft herausgestellt, wenn die Pouchzelle außerhalb des Plus-Kontaktbereichs und/oder außerhalb des Minus-Kontaktbereichs elektrisch isoliert ist. In einer besonders bevorzugten Ausgestaltung ist die Zelloberseite und/oder die Zellunterseite im Wesentlichen flach ausgebildet. Eine Zelldicke ist vorzugsweise geringer als eine Zellbreite und/oder eine Zelltiefe.

Es hat sich als vorteilhaft herausgestellt, wenn sich die Verbindungselemente jeweils senkrecht zur flachen Zelloberseite und/oder senkrecht zur flachen Zellunterseite erstrecken. Die Verbindungselemente können über die flache Zelloberseite und/oder die flache Zellunterseite hinausragen. In einer besonders bevorzugten Ausgestaltung ist der Plus-Kontaktbereich und der Minus-Kontaktbereich über innerhalb der Pouchzelle verlaufende Schleifen oder elektrische Leitungen aus der Pouchzelle herausgeführt.

In allen hier beschriebenen Ausführungsbeispielen kann der Plus-Kontaktbereich und/oder der Minus-Kontaktbereich beispielsweise metallisch ausgebildet sein. Der Plus-Kontaktbereich und/oder der Minus-Kontaktbereich kann aus Aluminium bestehen oder Aluminium aufweisen. Der Minus-Kontaktbereich ist vorzugsweise als metallischer Minuspol ausgebildet. Ein metallischer Minuspol kann beispielsweise aus Nickel bestehen oder Nickel aufweisen. Eine solche Ausgestaltung ist alternativ oder zusätzlich für den Plus-Kontaktbereich möglich.

Die Erfindung wird ebenfalls gelöst durch einen Stack mit einer Mehrzahl von Pouchzellen der vorbeschriebenen Art, wobei die Pouchzellen über ihre jeweiligen Verbindungselemente elektrisch miteinander kontaktiert sind. Vorzugsweise ist eine solche Kontaktierung eine Reihenschaltung, wobei ein Plus-Kontaktbereich einer ersten Pouchzelle mit einem Minus-Kontaktbereich einer benachbarten Pouchzelle elektrisch kontaktiert ist. Ein solcher Stack kann durch die mit Bezug auf die Pouchzelle vorbeschriebenen Merkmale in entsprechender Weise weitergebildet sein.

Die Erfindung führt ebenfalls auf die Verwendung eines Stacks der vorbeschriebenen Art zur Versorgung einer elektrischen Handwerkzeugmaschine, wobei der Stack vorzugsweise in einem Akkupack der elektrischen Handwerkzeugmaschine angeordnet ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein Pouchzelle des Standes der Technik;
- Fig. 2: ein erstes bevorzugtes Ausführungsbeispiel einer erfindungsgemäßen Pouchzelle;
- Fig. 3: ein bevorzugtes Ausführungsbeispiel eines erfindungsgemäßen Stacks;
- Fig. 4: Steckverbindungselemente eines zweiten bevorzugten Ausführungsbeispiels einer erfindungsgemäßen Pouchzelle;
- Fig. 5: zwei Pouchzellen des zweiten bevorzugten Ausführungsbeispiels in Gänze;
- Fig. 6: ein drittes bevorzugtes Ausführungsbeispiel einer erfindungsgemäßen Pouchzelle in Draufsicht;
- Fig. 7: das Ausführungsbeispiel der Fig. 6 in perspektivischer Darstellung; und
- Fig. 8: ein viertes bevorzugtes Ausführungsbeispiel einer erfindungsgemäßen Pouchzelle.

### Ausführungsbeispiele:

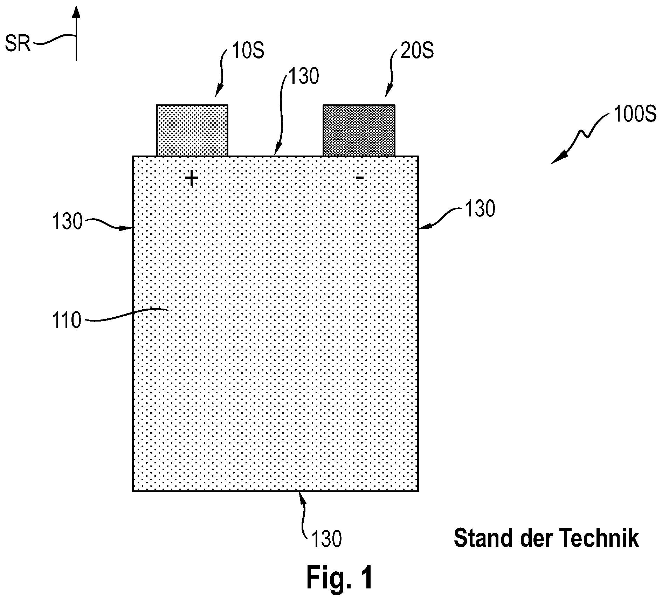

Eine Pouchzelle 100S des Standes der Technik ist in Fig. 1 dargestellt. Die Pouchzelle 100S weist einen Plus-Kontaktbereich 10 und einen Minus-Kontaktbereich 20 auf, über die die Pouchzelle 100S elektrisch kontaktiert und so geladen und entladen werden kann. Die Pouchzelle 100S ist flächig ausgebildet und weist eine Zelloberseite 110 und eine hier nicht gezeigte Zellunterseite auf, die der Zelloberseite 110 gegenüberliegt.

Wie der Fig. 1 entnommen werden kann, ist der Plus-Kontaktbereich 10S und der Minus-Kontaktbereich 20S jeweils als Kontaktfahne ausgebildet, die in seitlicher Richtung SR von der Pouchzelle 100S abstehen. Dabei weist die Pouchzelle 100S einen umlaufenden Zellrandstreifen 130 auf, an dem zumindest an einer Seite der Plus-Kontaktbereich 10S und der Minus-Kontaktbereich 20S befindlich ist.

Die in Fig. 1 gezeigte Pouchzelle 100S hat den bereits eingangs genannten Nachteil, dass sie aufgrund der vergleichsweise dicht beieinanderliegenden Kontaktfahnen (Plus-Kontaktbereich 10S und Minus-Kontaktbereich 20S) in einem Massenproduktionsprozess vergleichsweise schwierig zu handhaben, da - bei unachtsamer Handhabung - ein Kurzschluss der Pouchzelle 100S droht.

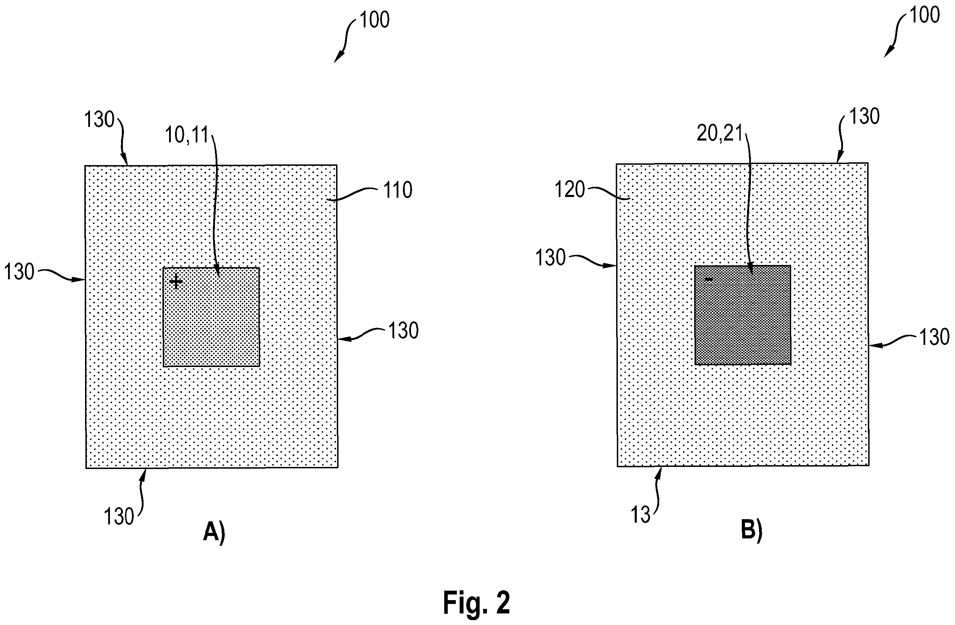

In Abkehr zu der Pouchzelle 100S des Standes der Technik zeigt Fig. 2 nunmehr eine erfindungsgemäße Pouchzelle 100. Dabei zeigt Fig. 2A die Oberseite und Fig. 2B die Unterseite der Pouchzelle.

Die Pouchzelle 100 der Fig. 2 weist einen Plus-Kontaktbereich 10 und einen Minus-Kontaktbereich 20 auf, über die die Pouchzelle 100 elektrisch kontaktiert und so beladen und entladen werden kann. Die Pouchzelle 100 ist flächig ausgebildet und weist eine Zelloberseite 110 auf (Fig. 2A). Die Pouchzelle 100 weist ebenfalls eine Zellunterseite 120 auf (Fig. 2B), die der Zelloberseite 110 gegenüberliegt.

Erfindungsgemäß ist vorgesehen, dass der Plus-Kontaktbereich 10 ausschließlich auf der Zelloberseite 110 und der Minus-Kontaktbereich 20 ausschließlich auf der Zellunterseite 120 befindlich ist.

Im ersten bevorzugten Ausführungsbeispiel der Fig. 2 ist gut zu erkennen, dass ein umlaufender Zellrandstreifen 130 frei von jedweden elektrischen Kontaktierelementen ist.

Im Ausführungsbeispiel der Fig. 2 ist der Plus-Kontaktbereich 10 als elektrisches Plus-Verbindungselement 11 und der Minus-Kontaktbereich 20 als elektrisches Minus-Verbindungselement 21 ausgebildet. Dabei sind das Plus-Verbindungselement 11 und das Minus-Verbindungselement 21 jeweils flach und hier beispielhaft quadratisch ausgebildet. Das Plus-Verbindungselement 11 und das Minus-Verbindungselement 21 dienen zum Kontaktieren der Pouchzelle 100 mittels Verpressens.

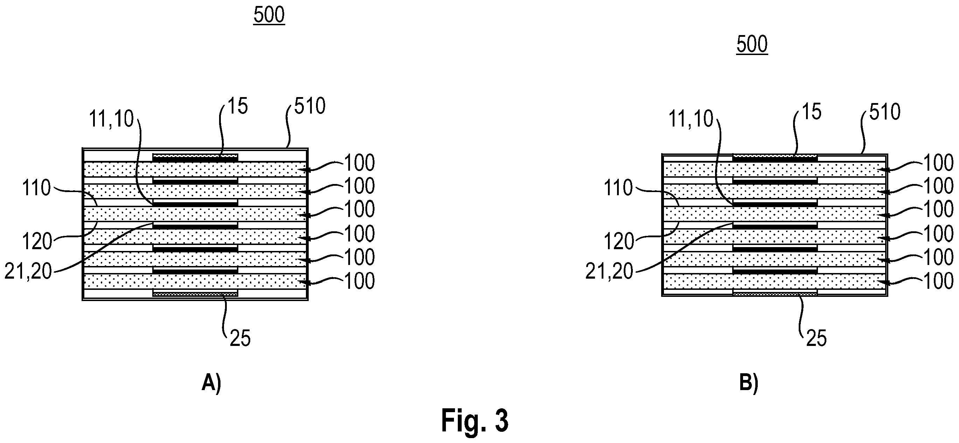

Ein Stack 500, der eine Mehrzahl verpresster Pouchzellen 100 aufweist, ist in Fig. 3 dargestellt. Es zeigen Fig. 3A und B verschiedene Ausgestaltungsvarianten eines Stacks 500 innerhalb eines Gehäuses 510.

Beiden Figuren 3A und B ist gemein, dass eine Mehrzahl geschichteter Pouchzellen 100 vorgesehen ist, hier beispielhaft sechs geschichtete Pouchzellen 100. Jede der Pouchzellen 100 weist eine Zelloberseite 110 mit darauf angeordnetem Plus-Kontaktbereich 10 und eine Zellunterseite 120 mit darauf angeordnetem Minus-Kontaktbereich 20 auf. Dabei stehen Plus-Kontaktbereich 10 einer ersten Pouchzelle 100 mit dem Minus-Kontaktbereich 20 einer benachbarten Pouchzelle in Verbindung. Mit anderen Worten sind die Pouchzellenstacks 500 Reihenschaltungen von Pouchzellen 100.

Auch in Fig. 3 ist gut zu erkennen, dass die jeweiligen Pouchzellen 100 lediglich auf ihrer Zelloberseite 110 bzw. Zellunterseite 120 elektrisch kontaktiert sind.

Die oberste Pouchzelle 100 im Stack weist zudem einen Plus-Stackanschluss 15 auf. Ein Minus-Stackanschluss 25 ist an der untersten Pouchzelle 100 im Stapel vorgesehen. Über den Plus-Stackanschluss 15 und den Minus-Stackanschluss 25 erfolgt eine elektrische Einbindung des Stacks 500 beispielsweise in einen hier nicht genauer dargestellten Akkupack für eine elektrische Handwerkzeugmaschine. Im Folgenden soll kurz auf die Unterschiede der Ausführungsbeispiele der Fig. 3A und B eingegangen werden. Fig. 3A zeigt ein Gehäuse 510 in einer geschlossenen Variante, das heißt der Plus-Stackanschluss 15 und der Minus-Stackanschluss 25 sind nicht Teil einer Oberfläche des Gehäuses 510. Eine elektrische Kontaktierung des Plus-Stackanschlusses 15 bzw. des Minus-Stackanschlusses 25 zur Umgebung erfolgt durch hier nicht weiter dargestellte elektrische Verbindungsleitungen.

Im Gegensatz dazu zeigt Fig. 3B den Stack 500 in einer offenen Variante des Gehäuses 510, das heißt der Plus-Stackanschluss 15 und der Minus-Stackanschluss 25 bilden einen Teil der Oberfläche des Gehäuses 510.

Die Gehäuse 510 der Fig. 3 können quaderförmig ausgebildet sein, vorzugsweise sind diese aber würfelförmig ausgebildet.

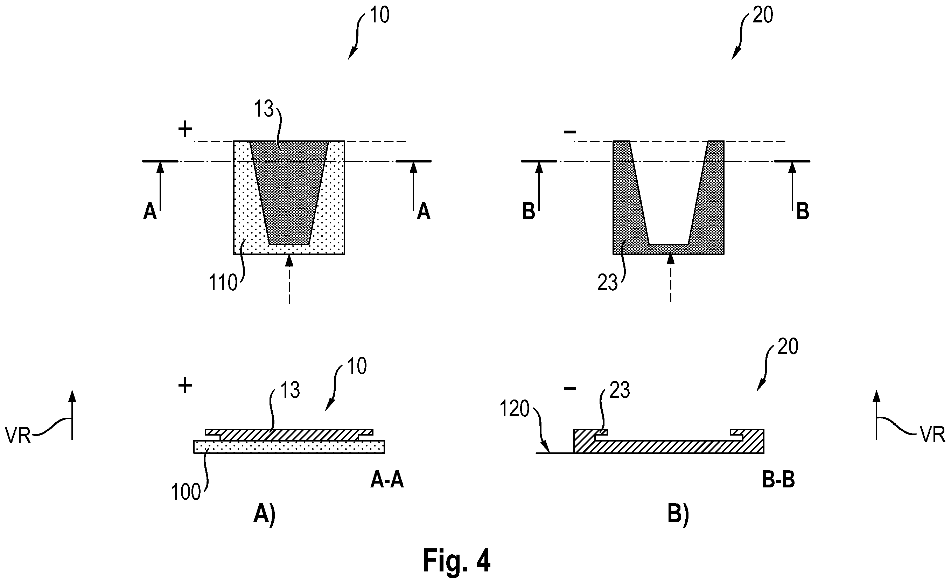

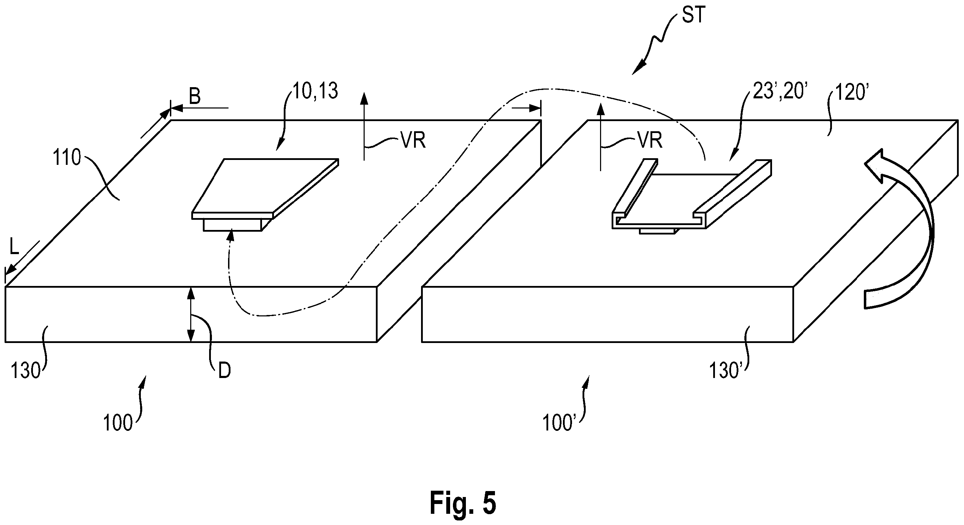

Fig. 4 zeigt Ausschnitte eines zweiten bevorzugten Ausführungsbeispiels einer erfindungsgemäßen Pouchzelle 100 (vgl. auch Fig. 5).

In Fig. 4 ist der Plus-Kontaktbereich 10 als kombiniertes elektrisch-mechanisches Plus-Steckverbindungselement ausgebildet. Der Minus-Kontaktbereich 20 ist als kombiniertes elektrisch-mechanisches Minus-Steckverbindungselement ausgebildet. Wie der Fig. 4 in Zusammenschau entnommen werden kann, sind die Steckverbindungselemente 13, 23 komplementären Typs und bilden hier eine Steckverbindung im Sinne einer trapezförmigen oder keilförmigen Verbindung nach Art einer Schlittenführung.

Fig. 4A zeigt den Plus-Kontaktbereich 10 im Detail, wobei im oberen Teil der Fig. 4A eine Draufsicht und im unteren Teil der Fig. 4A ein Schnitt gemäß der Schnittlinie A-A dargestellt ist. Gut zu erkennen ist, dass die Zelloberseite 110 im Wesentlichen flach ist und das Plus-Steckverbindungselement 13 in senkrechter Richtung VR über die flache Zelloberseite 110 absteht.

In Fig. B wiederum ist gut zu erkennen, dass auch das Minus-Steckverbindungselement 23 in senkrechter Richtung VR über eine hier angedeutete flache Zellunterseite 120 hinausragt. An dieser Stelle sei nochmals erwähnt, dass mehrere Möglichkeiten einer Ausgestaltung der Verbindungselemente als Steckverbindungselemente denkbar sind, wobei Fig. 4 jedenfalls eine bevorzugte Ausgestaltung darstellt.

Fig. 5 zeigt zwei Pouchzellen 100, 100' gemäß dem zweiten bevorzugten Ausführungsbeispiel der Fig. 4 vor dem Zusammenstecken. Es handelt sich also bei den Pouchzellen 100, 100' um zwei Pouchzellen, die in einem hier nicht gezeigten Stack benachbart wären.

Die beiden Pouchzellen 100, 100' der Fig. 5 sind identisch ausgebildet, wobei bei der Pouchzelle 100 auf der linken Seite der Fig. 5 die Zelloberseite 110 oben liegt, wohingegen auf der rechten Seite der Fig. 5 eine Zellunterseite 120' der zweiten Pouchzelle 100' beispielhaft nach oben dargestellt ist.

Wie der Fig. 5 aufgrund der perspektivischen Darstellung gut zu entnehmen ist, sind das Plus-Steckverbindungselement 13 der ersten Pouchzelle 100 und das Minus-Steckverbindungselement 23' der zweiten Pouchzelle 100' zueinander komplementär ausgebildet. Im Zuge eines Zusammensteckens der beiden Pouchzellen 100, 100' - dies ist durch die gestrichelte Linie angedeutet - kommt es zu einem mechanischen Verschließen des Plus-Steckverbindungselements 13 mit dem Minus-Steckverbindungselement 23'. Durch dieses mechanische Verschließen wird gleichzeitig eine elektrische Kontaktierung der beiden Pouchzellen realisiert. Ein Zusammenstecken erfolgt dabei in Steckrichtung ST parallel zur Zelloberseite 110 und zur Zellunterseite 120'.

Wie ebenfalls aus Fig. Ersichtliche ist, ist eine Dicke D der Pouchzelle 100 geringer als die Breite B und die Länge L der Pouchzelle. Im vorliegend dargestellten Ausführungsbeispiel ist die Dicke D geringer als ein Fünftel der Breite B und der Länge L.

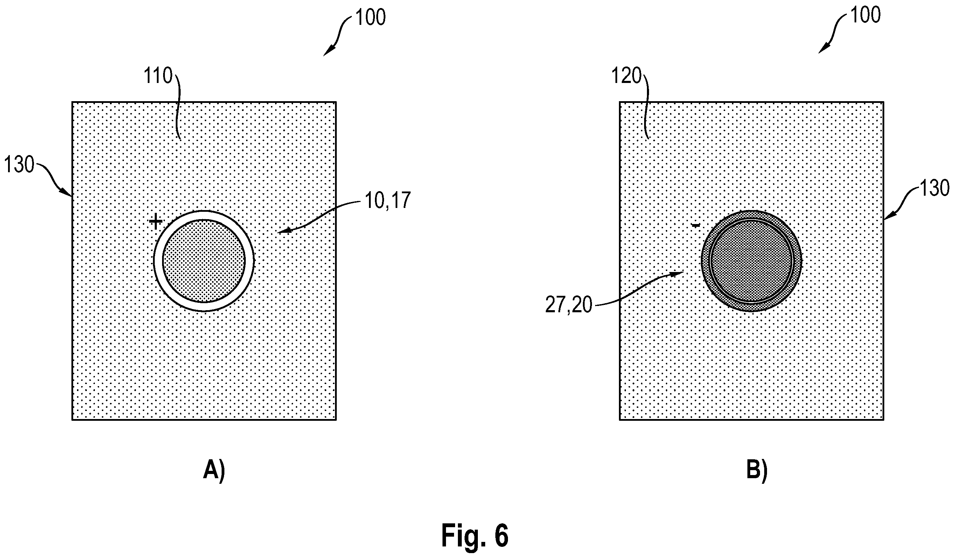

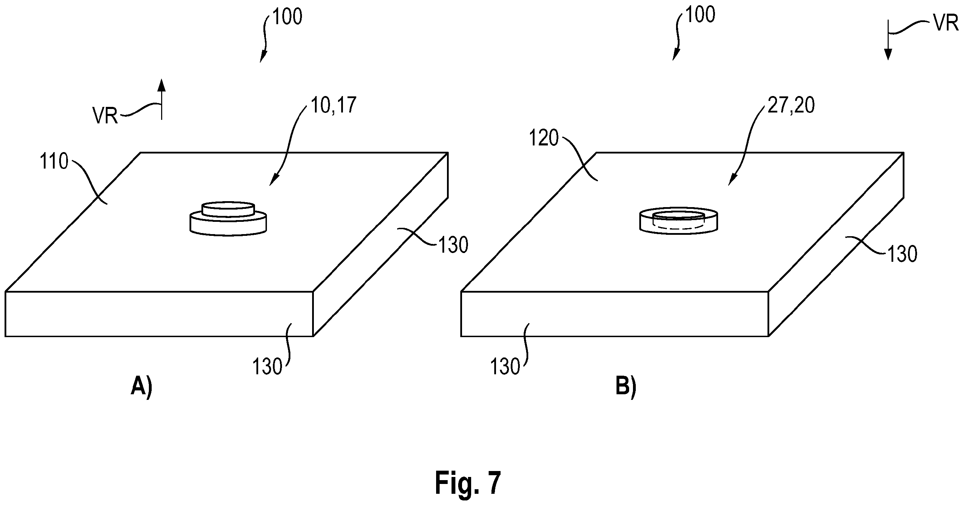

Fig. 6 zeigt nunmehr ein drittes bevorzugtes Ausführungsbeispiel einer erfindungsgemäßen Pouchzelle 100 in Draufsicht (Fig. 6A) sowie in Unteransicht (Fig. 6B). Im Ausführungsbeispiel der Fig. 6 ist der Plus-Kontaktbereich 10 als Plus-Schraubenverbindungselement 17 ausgebildet. Der Minus-Kontaktbereich 20 ist als Minus-Schraubverbindungselement 27 ausgebildet. Das Plus-Schraubenverbindungselement 17 Minus-Schraubverbindungselement 27 sind komplentären Typs, wie aus der perspektivischen Seitenansicht der Fig. 7 ersichtlich wird. Wie aus der Fig. 7A ersichtlich ist, ist das Plus-Schraubverbindungselement 17 als männliches Verbindungselement ausgebildet. Das Minus-Schraubverbindungselement 27 (Fig. 7B) ist als weibliches Schraubverbindungselement ausgebildet. In beiden Ansichten gut zu erkennen ist, dass die Zelloberseite 110 und die Zellunterseite 120 im Wesentlichen flach sind und ein umlaufender Zellrandstreifen 130 frei von jedweden elektrischen Kontaktierelementen ist.

Das Plus-Schraubverbindungselement 17 und das Minus-Schraubverbindungselement 27 sind zueinander komplementären Typs. Mit anderen Worten kann das Plus-Schraubverbindungselement 17 nach Art einer Schraube in das Minus-Schraubverbindungselement 27 (nach Art einer Mutter) eingeschraubt werden. Selbstverständlich gilt dies für verschiedene Zellen gleicher Bauart, da Fig. 7 hier beispielhaft die Oberseite und die Unterseite ein und derselben Pouchzelle 100 zeigt.

Gut zu erkennen in Fig. 7 ist ebenfalls, dass das Plus-Steckverbindungselement 13 in senkrechter Richtung VR über die flache Zelloberseite 110 hinausragt. Das Minus-Schraubverbindungselement 27 ragt in senkrechter Richtung VR über die Zellunterseite 120 hinaus. Außerhalb des Plus-Kontaktbereichs 10 und außerhalb des Minus-Kontaktbereichs 20 ist die Pouchzelle 100 elektrisch isoliert. Dies ist vorteilhafterweise auch bei allen anderen Ausführungsbeispielen eine bevorzugte Weiterbildung.

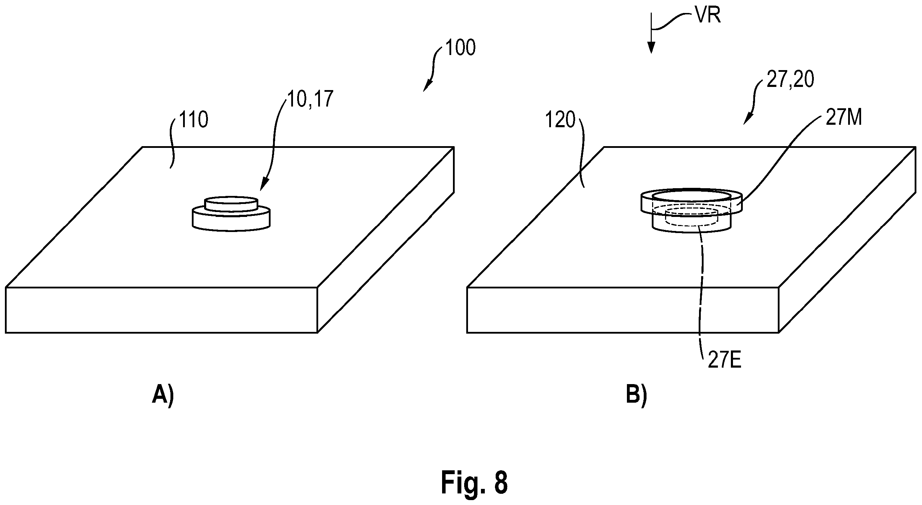

Fig. 8 zeigt schließlich ein viertes bevorzugtes Ausführungsbeispiel einer erfindungsgemäßen Pouchzelle. Die Pouchzelle 100 weist einen Plus-Kontaktbereich 10 auf einer Zelloberseite 110 und einen Minus-Kontaktbereich 20 auf einer gegenüberliegenden Zellunterseite 120 auf. Der Plus-Kontaktbereich 10 ist ausschließlich auf der Zelloberseite 110 und der Minus-Kontaktbereich 20 ist ausschließlich auf der Zellunterseite 120 angeordnet.

Der Plus-Kontaktbereich 10 ist als männliches Plus-Schraubverbindungselement 17 und der Minus-Kontaktbereich 20 als weibliches Minus-Schraubverbindungselement 27 ausgebildet.

Im Gegensatz zu dem mit Bezug auf Fig. 7 beschriebenen Ausführungsbeispiel erstreckt sich das Minus-Schraubverbindungselement 27 lediglich abschnittsweise über die Zellunterseite 120 in senkrechter Richtung VR ab. Wie auch bei dem Plus-Schraubverbindungselement 17 handelt es sich bei dem Minus-Schraubverbindungselement 27 um ein elektrisch-mechanisches Verbindungselement, das heißt die Schraubverbindungselemente 17, 27 ermöglichen sowohl ein elektrisches Kontaktieren als auch ein mechanisches Verbinden von Pouchzellen untereinander.

Im Unterschied zu dem mit Bezug auf Fig. 7 beschriebenen Ausführungsbeispiel ist beim Ausführungsbeispiel der Fig. 8 das Minus-Schraubelement 27 zweiteilig ausgebildet, das heißt es verfügt über einen rein mechanischen Bereich 27M und einen elektrischen Bereich 27E. Somit ist das Minus-Schraubverbindungselement 27 lediglich abschnittsweise elektrisch leitfähig, nämlich im Bereich 27E, sodass ein elektrisches Kontaktieren erst erfolgt, wenn das Plus-Schraubverbindungselement 17 vollständig im Minus-Schraubverbindungselement 27 eingeschraubt ist. Eine elektrische Kontaktierung erfolgt dabei über den elektrischen Bereich 27E. Die in Fig. 8 gezeigte Variante hat den Vorteil einer weiter erhöhten Kurzschlusssicherheit für einen Massenproduktionsprozess von Pouchzellenstacks.

### Bezugszeichenliste

- 10: Plus-Kontaktbereich
- 11: Plus-Verbindungselement
- 13: Plus-Steckverbindungselement
- 15: Plus-Stackanschluss
- 17: Plus-Schraubverbindungselement
- 20: Minus-Kontaktbereich
- 21: Minus-Verbindungselement
- 23: Minus-Steckverbindungselement
- 25: Minus-Stackanschluss
- 27: Minus-Schraubverbindungselement
- 27M: mechanischer Bereich
- 27E: elektrischer Bereich

- 100: Pouchzelle
- 110: Zelloberseite
- 120: Zellunterseite
- 130: Zellenrandstreifen
- 500: Stack
- 510: Gehäuse

- B: Breite
- D: Dicke
- L: Länge
- PR: parallele Richtung
- SR: seitliche Richtung
- ST: Steckrichtung
- VR: senkrechte Richtung

## Patentansprüche

1. Pouchzelle (100) mit einem Plus-Kontaktbereich (10) und einem Minus-Kontaktbereich (20), über die die Pouchzelle (100) elektrisch kontaktiert und so beladen und entladen werden kann, wobei die Pouchzelle (100) flächig ausgebildet ist und eine Zelloberseite (110) sowie eine der Zelloberseite (110) gegenüberliegende Zellunterseite (120) aufweist, wobei dass der Plus-Kontaktbereich (10) ausschließlich auf der Zelloberseite (110) und der Minus-Kontaktbereich (20) ausschließlich auf der Zellunterseite (120), oder umgekehrt, befindlich ist, wobei der Plus-Kontaktbereich (10) als elektrisches und/oder mechanisches Plus-Verbindungselement (11) und der Minus-Kontaktbereich (20) als elektrisches und/oder mechanisches Minus-Verbindungselement (21) ausgebildet ist und das Plus-Verbindungselement (11) und das Minus-Verbindungselement (21) jeweils als Steckverbindungselement (13, 23), vorzugsweise komplementären Typs, ausgebildet sind und das Plus-Verbindungselement (11) und das Minus-Verbindungselement (21) jeweils als Steckverbindungselement (13, 23), vorzugsweise komplementären Typs, ausgebildet sind und wobei eine Steckrichtung (ST) der Steckverbindungselemente (13, 23) parallel zur Zelloberseite (110) und zur Zellunterseite (120) orientiert ist.

2. Pouchzelle (100) nach Anspruch 1,
**dadurch gekennzeichnet, dass** die Pouchzelle (100) einen umlaufenden Zellrandstreifen (130) aufweist, der frei von elektrischen Kontaktfahnen oder frei von jedweden elektrischen Kontaktierelementen ist.

3. Pouchzelle (100) nach Anspruch 1,
**dadurch gekennzeichnet, dass** das Plus-Verbindungselement (11) und das Minus-Verbindungselement (21) jeweils flach und zum Kontaktieren mittels Verpressens oder Verschweißens ausgebildet sind.

4. Pouchzelle (100) nach Anspruch 1,
**dadurch gekennzeichnet, dass** das Plus-Verbindungselement (11) und das Minus-Verbindungselement (21) jeweils als Schraubverbindungselemente (17, 27), vorzugsweise komplementären Typs, ausgebildet sind.

5. Pouchzelle (100) nach einem der vorangehenden Ansprüche,
**dadurch gekennzeichnet, dass** die Schraubverbindungselemente (17, 27) lediglich abschnittweise elektrisch leitfähig sind, derart, dass ein elektrisches Kontaktieren erst nach einem mechanischen Kontaktieren erfolgt.

6. Pouchzelle (100) nach einem der vorangehenden Ansprüche,
**dadurch gekennzeichnet, dass** die Pochzelle (100) außerhalb des Plus-Kontaktbereichs (10) und des Minus-Kontaktbereichs (20) elektrisch isoliert ist.

7. Pouchzelle (100) nach einem der vorangehenden Ansprüche,
**dadurch gekennzeichnet, dass** die Zelloberseite (110) und die Zellunterseite (120) im Wesentlichen flach sind.

8. Pouchzelle (100) nach einem der vorangehenden Ansprüche,
**dadurch gekennzeichnet, dass** sich die Verbindungselemente (11, 21; 13, 23; 17, 27) jeweils senkrecht (VR) zur flachen Zelloberseite (110) und/oder Zellunterseite (120) erstrecken.

9. Pouchzelle (100) nach einem der vorangehenden Ansprüche,
**dadurch gekennzeichnet, dass** die Verbindungselemente (11, 21; 13, 23; 17, 27) über die flache Zelloberseite (110) bzw. die flache Zellunterseite (120) hinausragen.

10. Pouchzelle (100) nach einem der vorangehenden Ansprüche,
**dadurch gekennzeichnet, dass** der Plus-Kontaktbereich (10) und der Minus-Kontaktbereich (20) über innerhalb der Pouchzelle (100) verlaufende Schleifen oder Leitungen aus der Pouchzelle (100) herausgeführt sind.

11. Stack (500) aufweisend eine Mehrzahl von Pouchzellen (100) nach einem der vorangehenden Ansprüche, wobei die Pouchzellen (100) über ihre jeweiligen Verbindungselemente elektrisch miteinander kontaktiert sind.

12. Verwendung eines Stacks (500) nach Anspruch 11 zur Versorgung einer elektrischen Handwerkzeugmaschine.

## Claims

1. Pouch cell (100) having a positive contact region (10) and a negative contact region (20), by means of which contact regions electrical contact can be made with the pouch cell (100) and said pouch cell can be charged and discharged in this way, wherein the pouch cell (100) is of planar design and has a cell top side (110) as well as a cell bottom side (120) which is situated opposite the cell top side (110), wherein the positive contact region (10) is located exclusively on the cell top side (110) and the negative contact region (20) is located exclusively on the cell bottom side (120), or vice versa, wherein the positive contact region (10) is designed as an electrical and/or mechanical positive connection element (11) and the negative contact region (20) is designed as an electrical and/or mechanical negative connection element (21) and the positive connection element (11) and the negative connection element (21) are each designed as a, preferably complementary, plug-in connection element (13, 23) and the positive connection element (11) and the negative connection element (21) are each designed as a, preferably complementary, plug-in connection element (13, 23), and wherein a plug-in direction (ST) of the plug-in connection elements (13, 23) is oriented parallel in relation to the cell top side (110) and in relation to the cell bottom side (120).

2. Pouch cell (100) according to Claim 1,
**characterized in that** the pouch cell (100) has an encircling cell edge strip (130) which is free of electrical contact lugs or free of any kind of electrical contact-making elements.

3. Pouch cell (100) according to Claim 1,
**characterized in that** the positive connection element (11) and the negative connection element (21) are each of flat design and designed for contact-connection by means of pressing or welding.

4. Pouch cell (100) according to Claim 1,
**characterized in that** the positive connection element (11) and the negative connection element (21) are each designed as, preferably complementary, screw-connection elements (17, 27).

5. Pouch cell (100) according to one of the preceding claims,
**characterized in that** the screw-connection elements (17, 27) are electrically conductive only in sections in such a way that electrical contact is made only after mechanical contact is made.

6. Pouch cell (100) according to one of the preceding claims,
**characterized in that** the pouch cell (100) is electrically insulated outside the positive contact region (10) and the negative contact region (20).

7. Pouch cell (100) according to one of the preceding claims,
**characterized in that** the cell top side (110) and the cell bottom side (120) are substantially flat.

8. Pouch cell (100) according to one of the preceding claims,
**characterized in that** the connection elements (11, 21; 13, 23; 17, 27) each extend perpendicularly (VR) in relation to the flat cell top side (110) and/or cell bottom side (120).

9. Pouch cell (100) according to one of the preceding claims,
**characterized in that** the connection elements (11, 21; 13, 23; 17, 27) protrude beyond the flat cell top side (110) or the flat cell bottom side (120).

10. Pouch cell (100) according to one of the preceding claims,
**characterized in that** the positive contact region (10) and the negative contact region (20) are routed out of the pouch cell (100) by means of loops or lines which run within the pouch cell (100).

11. Stack (500) having a plurality of pouch cells (100) according to one of the preceding claims, wherein the pouch cells (100) are electrically contact-connected to one another by means of their respective connection elements.

12. Use of a stack (500) according to Claim 11 for supplying power to an electrical handheld power tool.

## Revendications

1. Cellule de poche (100) comprenant une zone de contact positif (10) et une zone de contact négatif (20) par lesquelles la cellule de poche (100) peut être mise en contact électrique et ainsi chargée et déchargée, dans laquelle la cellule de poche (100) est réalisée de manière plane et présente une face supérieure de cellule (110) ainsi qu'une face inférieure de cellule (120) opposée à la face supérieure de cellule (110), dans laquelle la zone de contact positif (10) se trouve uniquement sur la face supérieure de cellule (110), et la zone de contact négatif (20) se trouve uniquement sur la face inférieure de cellule (120), ou vice versa, dans laquelle la zone de contact positif (10) est réalisée sous forme d'élément de liaison positif (11) électrique et/ou mécanique, et la zone de contact négatif (20) est réalisée sous forme d'élément de liaison négatif (21) électrique et/ou mécanique, et l'élément de liaison positif (11) et l'élément de liaison négatif (21) sont réalisés respectivement comme des éléments de liaison enfichables (13, 23), de préférence de type complémentaire, et l'élément de liaison positif (11) et l'élément de liaison négatif (21) sont réalisés respectivement comme des éléments de liaison enfichables (13, 23), de préférence de type complémentaire, et dans laquelle une direction d'enfichage (ST) des éléments de liaison enfichables (13, 23) est orientée en parallèle à la face supérieure de cellule (110) et à la face inférieure de cellule (120).

2. Cellule de poche (100) selon la revendication 1, **caractérisée en ce que** la cellule de poche (100) présente une bande de bordure de cellule périphérique (130) qui est exempte de pattes de contact électriques ou exempte de tout élément de mise en contact électrique.

3. Cellule de poche (100) selon la revendication 1, **caractérisée en ce que** l'élément de liaison positif (11) et l'élément de liaison négatif (21) sont réalisés respectivement de manière plane et pour une mise en contact par compression ou par soudage.

4. Cellule de poche (100) selon la revendication 1, **caractérisée en ce que** l'élément de liaison positif (11) et l'élément de liaison négatif (21) sont réalisés respectivement sous forme d'éléments de vissage (17, 27), de préférence de type complémentaire.

5. Cellule de poche (100) selon l'une quelconque des revendications précédentes, **caractérisée en ce que** les éléments de vissage (17, 27) sont seulement électriquement conducteurs par endroits de sorte qu'une mise en contact électrique n'a lieu qu'après une mise en contact mécanique.

6. Cellule de poche (100) selon l'une quelconque des revendications précédentes, **caractérisée en ce que** la cellule de poche (100) est électriquement isolée à l'extérieur de la zone de contact positive (10) et de la zone de contact négative (20).

7. Cellule de poche (100) selon l'une quelconque des revendications précédentes, **caractérisée en ce que** la face de cellule supérieure (110) et la face de cellule inférieure (120) sont substantiellement planes.

8. Cellule de poche (100) selon l'une quelconque des revendications précédentes, **caractérisée en ce que** les éléments de liaison (11, 21 ; 13, 23 ; 17, 27) s'étendent respectivement perpendiculairement (VR) à la face supérieure de cellule plane (110) et/ou à la face inférieure de cellule plane (120).

9. Cellule de poche (100) selon l'une quelconque des revendications précédentes, **caractérisée en ce que** les éléments de liaison (11, 21 ; 13, 23 ; 17, 27) dépassent de la face supérieure de cellule plane (110) ou de la face inférieure de cellule plane (120).

10. Cellule de poche (100) selon l'une quelconque des revendications précédentes, **caractérisée en ce que** la zone de contact positif (10) et la zone de contact négatif (20) sont amenées à l'extérieur de la cellule de poche (100) par l'intermédiaire de boucles ou de lignes s'étendant à l'intérieur de la cellule de poche (100).

11. Empilement (500), présentant une pluralité de cellules de poche (100) selon l'une quelconque des revendications précédentes, dans lequel les cellules de poche (10) sont mises en contact électrique les unes avec les autres par l'intermédiaire de leurs éléments de liaison respectifs.

12. Utilisation d'un empilement (500) selon la revendication 11 pour alimenter une machine-outil à main électrique.
